# EUROPEAN PATENT APPLICATION

(11) **EP 3 553 693 A1**
(43) Date of publication of application: **16.10.2019**
(21) Application number: 17893077.2
(22) Date of filing: 28.12.2017
(51) Int. Cl.: G06K 9/00

(54) **FINGERPRINT RECOGNITION MODULE, FINGERPRINT RECOGNITION METHOD, AND RELATED PRODUCT**

(30) Priority: 22.01.2017 CN 201710057059
(71) Applicant: Guangdong OPPO Mobile Telecommunications Corp., Ltd., Guangdong 523860 (CN)
(72) Inventor: ZHANG, Haiping, Dongguan, Guangdong 523860 (CN)
(74) Representative: Manitz Finsterwald Patent- und Rechtsanwaltspartnerschaft mbB
(86) International application number: PCT/CN2017/119432
(87) International publication number: WO 2018/133642

(57) **Abstract**

A fingerprint recognition module, a fingerprint recognition method, and a related product. The method comprises: receiving a fingerprint collection instruction; and transmitting a charged fingerprint collection signal, a frequency of the charged fingerprint collection signal being greater than a preset frequency, the preset frequency being a switching frequency of a charger of an electronic device, and the charged fingerprint collection signal being used for collecting fingerprint image data of a user. In the method, when an electronic device is charged, noise interference of a charger to a fingerprint image can be reduced.

## Description

This application claims a priority to Chinese Patent Application No. 201710057059.8, titled "FINGERPRINT RECOGNITION MODULE, FINGERPRINT RECOGNITION METHOD, AND MOBILE TERMINAL", filed on January 22, 2017, the content of which is herein incorporated by reference in its entirety.

### TECHNICAL FIELD

The present application relates to the field of communications, and in particular, to a fingerprint identification assembly, a fingerprint identification method, and related products.

### BACKGROUND

Electronic devices such as smart phones have been used more and more widely. Everyone basically has a mobile phone in modern life. Currently, many mobile phones have fingerprint unlocking capabilities. When the fingerprint unlocking is performed, a sensor of a fingerprint identification assembly emits a fingerprint collection signal (for example, a square-wave signal, a sinusoidal signal, etc.), and data of a fingerprint image can be obtained as a capacitance between a finger and the sensor is formed from the fingerprint collection signal.

### SUMMARY OF THE DISCLOSURE

A fingerprint identification assembly, a fingerprint identification method, and related products are provided in embodiments of the present disclosure, which can reduce noise interference from a charger on a fingerprint image when the electronic device is charged.

In first aspect of the present disclosure, a fingerprint identification assembly applied in an electronic device is provided. The fingerprint identification assembly includes a fingerprint chip, a cover, and a base.

A cover is disposed at one side of the fingerprint chip;
A base is disposed at other side of the fingerprint chip away from the cover, configured to support the fingerprint chip and the cover; wherein the charging fingerprint collection signal is configured to collect data of a user's fingerprint image, a frequency of the charging fingerprint collection signal is greater than a preset frequency, and the preset frequency is a switching frequency of the charger of the electronic device.

In second aspect of the present disclosure, a fingerprint identification method applied in an electronic device is provided. The method is applied to an electronic device and includes:
receiving a fingerprint collection instruction;
emitting a charging fingerprint collection signal, wherein the charging fingerprint collection signal is configured to collect data of a user's fingerprint image, a frequency of the charging fingerprint collection signal is greater than a preset frequency, and the preset frequency is a switching frequency of a charger of the electronic device.

In third aspect of the present disclosure, a fingerprint identification apparatus applied in an electronic device is provided, which includes:
a receiving unit, configured to receive a fingerprint collection instruction;
a first emission unit, configured to emit a charging fingerprint collection signal, wherein the charging fingerprint collection signal is configured to collect data of fingerprint image, a frequency of the charging fingerprint collection signal is greater than a preset frequency, and the preset frequency is a switching frequency of a charger of the electronic device.

In fourth aspect of the present disclosure, an electronic device is provided, which includes a processor, a memory, and a communication interface, the processor being coupled to the memory and the communication interface;
The memory stores executable program codes, the communication interface is configured for wireless communication;
The processor is configured to invoke the executable program code in the memory to perform a method in the second aspect of the present disclosure.

In fifth aspect, a computer storage medium is provided in an embodiment of the present disclosure. The computer storage medium stores a computer program, wherein the computer program causes a computer to perform a part of or all of blocks in the second aspect of the present disclosure.

In sixth aspect, a computer program product is provided in an embodiment of the present disclosure. The computer program product includes a non-transitory computer readable storage medium storing a computer program, wherein the computer program being configured to cause a computer to perform a part of or all of blocks in the second aspect of the present disclosure. The computer program product may be a software installation package.

In an embodiment of the present disclosure, the electronic device receives the fingerprint collection instruction; emits the charging fingerprint collection signal is emitted, the frequency of the charging fingerprint collection signal is greater than the preset frequency, the preset frequency is the switching frequency of the charger of the electronic device, and the charging fingerprint collection signal is used for collecting data of the user's fingerprint image. The electronic device can emit a charging fingerprint collection signal of which a frequency is greater than a switching frequency of the charger to collect data of a user's fingerprint image. Thus, the charging fingerprint collection signal is offset from the switching frequency of the charger, which avoids interference from voltage output by the charger on the charging fingerprint collection signal and then can reduce the noise interference from the charger on data of the fingerprint image when the electronic device is charged.

### BRIEF DESCRIPTION OF THE DRAWINGS

In order to clearly explain the technical solutions in embodiments of the present disclosure or in the art, the drawings used in the description of the embodiments or the art will be briefly described below. Obviously, the drawings in the following description are merely for some embodiments of the present disclosure. For those of ordinary skill in the art, other drawings may also be obtained based on these drawings without any creative works.
FIG. 1a is a schematic structural diagram of a fingerprint identification assembly disclosed in an embodiment of the present disclosure;
FIG. 1b is a schematic structural diagram of another fingerprint identification assembly disclosed in an embodiment of the present disclosure;
FIG. 2 is a schematic flowchart of a fingerprint identification method disclosed in an embodiment of the present disclosure;
FIG. 3 is a schematic flowchart of another fingerprint identification method disclosed in an embodiment of the present disclosure;
FIG. 4 is a schematic structural diagram of a fingerprint identification apparatus disclosed in an embodiment of the present disclosure;
FIG. 5 is a schematic structural diagram of another fingerprint identification apparatus disclosed in an embodiment of the present disclosure;
FIG. 6 is a schematic structural diagram of another fingerprint identification apparatus disclosed in an embodiment of the present disclosure;
FIG. 7 is a schematic structural diagram of another fingerprint identification apparatus disclosed in an embodiment of the present disclosure;
FIG. 8 is a schematic structural diagram of an electronic device according to an embodiment of the present disclosure;
FIG. 9 is a schematic structural diagram of another electronic device according to an embodiment of the present disclosure; and
FIG. 10 is a schematic structural diagram of yet another electronic device according to an embodiment of the present disclosure.

### DETAILED DESCRIPTION

The technical solutions in the embodiments of the present application are clearly and completely described in the following with reference to the accompanying drawings in the embodiments of the present application. It is obvious that the described embodiments are only a part of the embodiments of the present application, but not all embodiments. All other embodiments obtained by a person skilled in the art based on the embodiments of the present application without creative efforts are within the scope of the present application.

The terms "first", "second" and "third" in the present application are used to distinguish different objects, and are not intended to describe a specific order. Furthermore, the terms "comprise" and "have" and variations thereof are intended to cover a non-exclusive inclusion. For example, a process, a method, a system, a product, or a device that comprises a series of steps or units is not limited to the listed steps or units, but optionally includes steps or units not listed, or optionally include other steps or units inherent to these processes, methods, products or devices.

References to "embodiment" herein mean that the specific features, structures, or characteristics described in connection with the embodiments can be included in at least one embodiment of the present application. The phrase appears in various places in the specification are not necessarily referring to the same embodiment, and are not exclusive or alternative embodiments that are mutually exclusive. Those skilled in the art will explicitly understand and implicitly understand that the embodiments described herein can be combined with other embodiments.

In addition, the electronic device involved in the embodiments of the present disclosure may include various handheld devices (such as mobile phones) having wireless communication functions, in-vehicle devices, wearable devices, computing devices or other processing devices connected to the wireless modem, and various forms of user equipment (UE), a mobile station (MS), a terminal device, and the like. For convenience of description, the devices mentioned above are collectively referred to as electronic devices. Taking the mobile phone as an example, when the mobile phone is charged, a switching frequency of a charger of the mobile phone closes to an emission frequency of the fingerprint collection signal, and the noise generated by the charger of the mobile phone may bring interference on data of a fingerprint image collected by the fingerprint identification assembly, resulting in the collected data of the fingerprint image is distorted. Therefore, a fingerprint identification method is provided in an embodiment of the present disclosure, which is applied to an electronic device and includes:
Receiving a fingerprint collection instruction;
Emitting a charging fingerprint collection signal, wherein a frequency of the charging fingerprint collection signal is greater than a preset frequency, the preset frequency is a switching frequency of the charger of the electronic device, and the charging fingerprint collection signal is used to collect data of a user's fingerprint image.

The embodiments of the present disclosure are described in detail in the following.

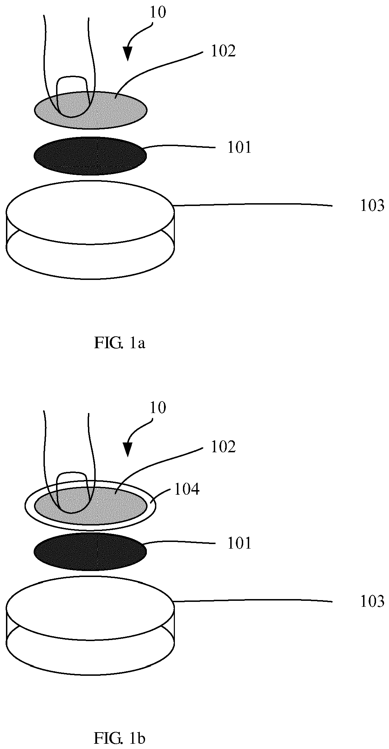

As shown in FIG. 1a, FIG. 1a is a schematic structural diagram of a fingerprint identification assembly according to an embodiment of the present disclosure. As shown in FIG. 1a, the fingerprint identification assembly 10 includes a fingerprint chip 101, a cover 102 and a base 103.

The cover 102 is disposed at one side of the fingerprint chip 101.

The base 103 is disposed at the other side of the fingerprint chip 101 away from the cover 102. The base 103 is configured to support the fingerprint chip 101 and the cover 102. The fingerprint chip 101 is configured to emit a charging fingerprint collection signal, and a frequency of the charging fingerprint collection signal is greater than a preset frequency. The preset frequency is a switching frequency of a charger of an electronic device, and the charging fingerprint collection signal is used to collect data of a user's fingerprint image.

In this embodiment of the present disclosure, the electronic device can emit the charging fingerprint collection signal by using the fingerprint identification assembly in the electronic device, and the frequency of the charging fingerprint collection signal is greater than the switching frequency of the charger. Thus, it ensures that the electronic device can has no interference from signals output by the charger when the electronic device is in the charging state.

Alternatively, as shown in FIG. 1b, FIG. 1b is a schematic structural diagram of another fingerprint identification assembly according to in an embodiment of the present disclosure. Compared with that in FIG. 1a, the fingerprint identification assembly 10 shown in FIG. 1b further includes a metal ring 104. The metal ring 104 is disposed around the cover 102.

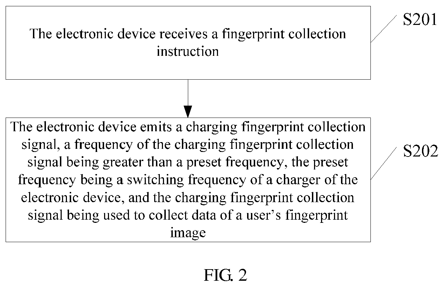

In this embodiment of the present disclosure, the metal ring 104 is also called as a fingerprint decoration ring, a fingerprint bezel, or a fingerprint ring. A manner in which the metal ring 104 is disposed around the cover 102 may be that the metal ring 104 is electrically connected to and surrounds the cover 102. The metal ring 104 may has a shape of one or a combination of a circle, an ellipse, a rectangle, and a polygon. The material of the metal ring 104 may be stainless steel, gold, silver, copper or the like. As shown in FIG. 2, FIG. 2 is a schematic flowchart of a fingerprint identification method according to an embodiment of the present disclosure. As shown in FIG. 2, the method includes actions/operations in the following blocks.

At block S201, the electronic device receives a fingerprint collection instruction.

In an embodiment of the present disclosure, the fingerprint collection instruction received by the electronic device may be input by a user's voice, or may be generated after the electronic device senses that the fingerprint of the user contacts the fingerprint identification assembly. The fingerprint collection instruction is used to trigger the electronic device to enable the fingerprint collection function and then trigger the electronic device to emit the fingerprint collection signal.

At block S202, the electronic device emits a charging fingerprint collection signal, wherein a frequency of the charging fingerprint collection signal is greater than a preset frequency, the preset frequency is a switching frequency of a charger of the electronic device, and the charging fingerprint collection signal is used to collect data of a user's fingerprint image.

In this embodiment of the present disclosure, the electronic device can emit the charging fingerprint collection signal by using the fingerprint identification assembly in the electronic device, and the frequency of the charging fingerprint collection signal is greater than the switching frequency of the charger, Thus, it ensures that the electronic device can have no interference from the signals output by the charger when the electronic device is in the charging state. The switching frequency of the charger refers to a frequency of a voltage signal (for example, the voltage pulse signal) output by the charger. The frequency of the voltage pulse signal output by the charger is generally hundreds of KHz. For example, when the frequency of the voltage pulse signal output by the charger is 500 kHz, the frequency at which the fingerprint identification assembly emits the charging fingerprint collection signal can be set to be 1.5 MHz. The charging fingerprint collection signal is used to collect data of a user's fingerprint image.

Alternatively, an amplitude of the charging fingerprint collection signal is greater than a preset amplitude, and the preset amplitude is a magnitude of a voltage signal output by the charger.

In this embodiment of the present disclosure, in order to further prevent the voltage signal output by the charger from bringing interference on the charging fingerprint collection signal, the amplitude of the charging fingerprint collection signal may be set to be greater than the amplitude of the voltage signal output by the charger.

For example, if the amplitude of the voltage signal output by the charger is 1.8V, the amplitude of the charging fingerprint collection signal can be set to be 6V.

Implementing the method shown in FIG. 2, the electronic device can emit a charging fingerprint collection signal of which a frequency is greater than a switching frequency of the charger to collect data of a user's fingerprint image. Thus, the charging fingerprint collection signal is offset from the switching frequency of the charger, which avoids interference from voltage output by the charger on the charging fingerprint collection signal and then can reduce the noise interference from the charger on data of the fingerprint image when the electronic device is charged.

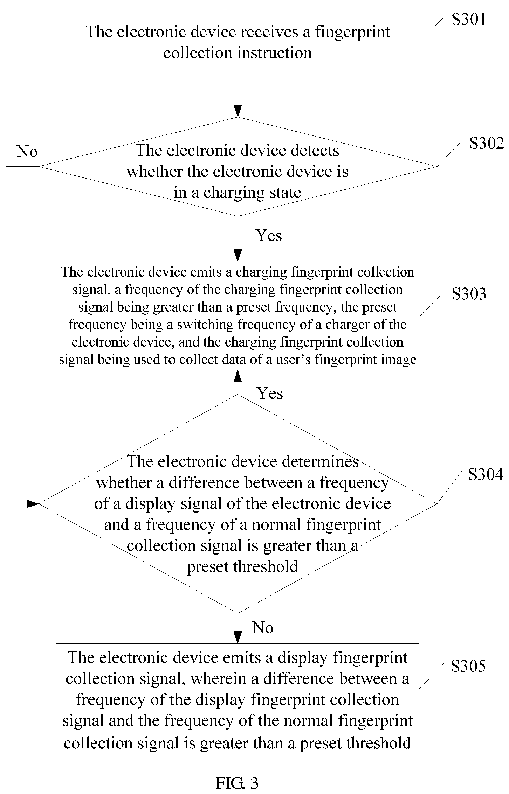

As shown in FIG. 3, FIG. 3 is a schematic flowchart of another fingerprint identification method disclosed in an embodiment of the present disclosure. As shown in FIG. 3, the fingerprint identification method includes actions/operations in the following blocks.

At block S301, the electronic device receives a fingerprint collection instruction.

The block S301 can be referred to the block S201 shown in FIG. 2, which will not be repeated herein.

At block S302, the electronic device detects whether the electronic device is in a charging state. If yes, block S303 is performed, and if no, block S304 is performed.

In an embodiment of the present disclosure, the electronic device can detect whether the electronic device is in the charging state by using a charging IC in the electronic device. When the electronic device detects that the electronic device is in the charging state, the electronic device emits a charging fingerprint collection signal. When the electronic device detects that the electronic device is not in the charging state, block S304 is performed.

At block S303, the electronic device emits a charging fingerprint collection signal, wherein a frequency of the charging fingerprint collection signal is greater than a preset frequency, the preset frequency is a switching frequency of a charger of the electronic device, and the charging fingerprint collection signal is used to collect data of a user's fingerprint image.

In an embodiment of the present disclosure, the frequency of the charging fingerprint collection signal is greater than the switching frequency of the charger of the electronic device. Further, the difference between the frequency of the charging fingerprint collection signal and the switching frequency of the charger of the electronic device meets certain conditions. Assume that the frequency of the charging fingerprint collection signal is f1 and the switching frequency of the charger is f2, f1 and f2 then meet at least one of the following conditions:
(1), (f1-f2)/f1 is greater than or equal to 50%, and (f1-f2)/f1 is less than or equal to -50%;
(2), (f1-f2)/f2 is greater than or equal to 50%, and (f1-f2)/f2 is less than or equal to -50%;
(3), (f1-f2)/f1 is greater than or equal to 80%, and (f1-f2)/f1 is less than or equal to -80%;
(4), (f1-f2)/f2 is greater than or equal to 80%, and (f1-f2)/f2 is less than or equal to -80%;
(5), (f1-f2)/f1 is greater than or equal to 90%, and (f1-f2)/f1 is less than or equal to -90%;
(6), (f1-f2)/f2 is greater than or equal to 90%, and (f1-f2)/f2 is less than or equal to -90%.

In general, the greater the absolute value of the difference between the frequency of the charging fingerprint collection signal and the switching frequency of the charger of the electronic device is, the smaller the interference from the charger on the charging fingerprint collection signal emitted by the electronic device is.

At block S304, the electronic device determines whether a difference between a frequency of a display signal of the electronic device and a frequency of a normal fingerprint collection signal is greater than a preset threshold. If yes, the block S303 is performed, and if no, block S305 is performed.

In an embodiment of the present disclosure, when the electronic device detects that the electronic device is not in the charging state, the electronic device determines whether the difference between the frequency of the display signal of the electronic device and the frequency of the normal fingerprint collection signal is greater than a preset threshold. The display signal of the electronic device may has a frequency which any signal displayed on a display in the electronic device has, for example, a refresh frequency of the display in the electronic device. For an electronic device including a liquid crystal display, the frequency of the display signal of the electronic device may also refer to a display frequency of each row of the liquid crystal display transistors of the liquid crystal display in the electronic device. For example, for a liquid crystal display with a resolution of 1024^{∗}720, if the refresh frequency of the liquid crystal display in the electronic device is 60 Hz, the display frequency of each line of the liquid crystal display transistors of the liquid crystal display of the electronic device is 60 Hz^{∗}720=43.2. KHz. If the difference between the frequency of the normal fingerprint collection signal and the display frequency of each row of the liquid crystal display transistor of the liquid crystal display in the electronic device is less than a preset threshold, displaying of each line of the liquid crystal display transistors of the liquid crystal display in the electronic device will bring interference on the normal fingerprint collection signals.

The larger the preset threshold is, the smaller the interference from the display signal of the electronic device on the normal fingerprint collection signal is.

For example, if the frequency of the display signal of the electronic device is f1 and the frequency of the normal fingerprint collection signal is f2, the preset threshold may be set to be one of f1^{∗}50%, f2^{∗}50%, f1^{∗}80%, f2^{∗}80%, f1^{∗}90%, and f2^{∗}90%.

At block S305, the electronic device emits a display fingerprint collection signal, wherein a difference between a frequency of the display fingerprint collection signal and the frequency of the normal fingerprint collection signal is greater than a preset threshold.

In an embodiment of the present disclosure, when the difference between the frequency of the display signal of the electronic device and the frequency of the normal fingerprint collection signal is less than or equal to a preset threshold, the electronic device emits the display fingerprint collection signal. The difference between the frequency of the display fingerprint collection signal and the frequency of the normal fingerprint collection signal is greater than a preset threshold.

Alternatively, the difference between an amplitude of the display fingerprint collection signal and an amplitude of the display signal of the electronic device is greater than a preset amplitude.

In this embodiment of the present disclosure, in order to further prevent the display signal of the electronic device bring interference on the display fingerprint collection signal, the difference between the amplitude of the display fingerprint collection signal and the amplitude of the display signal of the electronic device may be set to be greater than a preset amplitude. The preset amplitude can be preset and stored in a non-volatile memory of the electronic device.

For example, if the amplitude of the display signal of the electronic device is 1.8V and the preset amplitude is 4V, the amplitude of the display fingerprint collection signal may be set to 6V.

In this embodiment of the present disclosure, when the electronic device is in the charging state, the electronic device may emit the charging fingerprint collection signal of which the frequency is greater than a switching frequency of the charger to collect data of user's fingerprint image, so that the frequency of the charging fingerprint collection signal is offset from the charging frequency of the charger, which avoids interference from the voltage signals output by the charger on the charging fingerprint collection signal, and then can reduce the noise interference from the charger on the fingerprint image when the electronic device is charged. When the electronic device is not in the charging state, the electronic device may emit the display fingerprint collection signal of which frequency is greater than that of the normal fingerprint collection signal with a preset threshold, so that the frequency of the display fingerprint collection signal is offset from the frequency of the display signal of the electronic device, which avoids interference from the display signal of the electronic device on the charging fingerprint collection signal.

The above description mainly introduces the solution of the embodiment of the present disclosure from the perspective of the method side execution process. It can be understood that the electronic device includes corresponding hardware structures and/or software modules for performing the respective functions in order to implement the above functions. Those skilled in the art will readily appreciate that the present disclosure can be implemented by hardware or a combination of hardware and computer software, combined with the elements and algorithm steps of the various examples described in embodiments disclosed herein. Whether a function is implemented by hardware or a way that the computer software drives hardware depends on specific applications and design constraints of the solution. A person skilled in the art can use different methods for each particular application to implement the described functionality, but such implementation should not be considered to be beyond the scope of the disclosure.

In an embodiment of the present disclosure, the electronic device may be divided into functional units according to the foregoing method example. For example, each functional unit may be obtained according to each function. Two or more functions may also be integrated into one processing unit. The above integrated unit can be implemented in the form of hardware or in the form of a software functional unit. It should be noted that the unit-division in the embodiment of the present disclosure is schematic, and is only a logical function division. In an actual implementation, there may be another division manner.

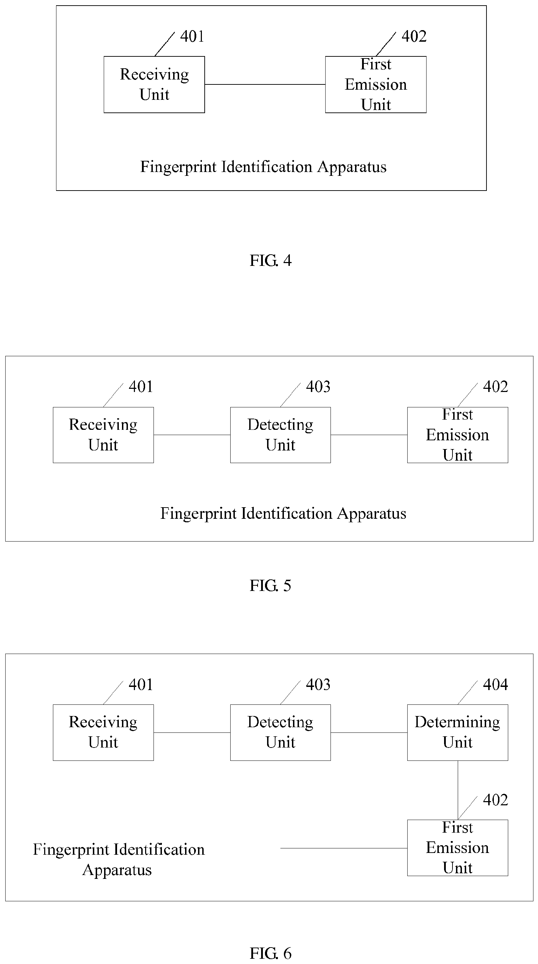

As shown in FIG. 4, FIG. 4 is a schematic structural diagram of a fingerprint identification apparatus according to an embodiment of the present disclosure. The fingerprint identification apparatus is applied to an electronic device. As shown in FIG. 4, the fingerprint identification apparatus includes a receiving unit 401 and a first emission unit 402.

The receiving unit 401 is configured to receive a fingerprint collection instruction.

The first emission unit 402 is configured to emit a charging fingerprint collection signal, wherein a frequency of the charging fingerprint collection signal is greater than a preset frequency, the preset frequency is a switching frequency of a charger of the electronic device, and the charging fingerprint collection signal is used to collect data of a user's fingerprint image.

The electronic device can emit a charging fingerprint collection signal of which a frequency is greater than a switching frequency of the charger to collect data of a user's fingerprint image. Thus, the charging fingerprint collection signal is offset from the switching frequency of the charger, which avoids interference from voltage output by the charger on the charging fingerprint collection signal and then can reduce the noise interference from the charger on data of the fingerprint image when the electronic device is charged.

Alternatively, the receiving unit 401 receives the fingerprint collection instruction in the following manner: user voice input or sensing user's fingerprint contacts on the fingerprint identification assembly.

The implementation of the fingerprint identification apparatus shown in FIG. 4, may be referred to the method embodiment shown in FIG. 2, which is not described herein again.

As shown in FIG. 5, FIG. 5 is a schematic structural diagram of another fingerprint identification apparatus disclosed in the embodiment of the present disclosure. What described in FIG. 5 is obtained by further optimizing based on FIG. 4. As shown in FIG. 5, the fingerprint identification apparatus further includes a detecting unit 403 in addition to the receiving unit 401 and the first emission unit 402 as shown in FIG. 4.

The detecting unit 403 is configured to detect whether the electronic device is in a charging state.

The first emission unit 402 is further configured to emit the charging fingerprint collection signal when the detecting unit 403 detects that the electronic device is in the charging state.

The implementation of the fingerprint identification apparatus shown in FIG. 5, may be referred to the method embodiment shown in FIG. 3, which is not described herein again.

As shown in FIG. 6, FIG. 6 is a schematic structural diagram of another fingerprint identification apparatus disclosed in the embodiment of the present disclosure. What described in FIG. 6 is obtained by further optimizing based on FIG. 5. As shown in FIG. 6, the fingerprint identification apparatus further includes a determining unit 404 in addition to the receiving unit 401, the first emission unit 402, and the detecting unit 403 as shown in FIG. 5.

The determining unit 404 is configured to determine whether the difference between the frequency of the display signal of the electronic device and the frequency of the normal fingerprint collection signal is greater than a preset threshold when the detecting unit 403 detects that the electronic device is not in the charging state.

The first emission unit 402 is further configured to emit the charging fingerprint collection signal when the determining unit 404 determines that the result is YES.

The implementation of the fingerprint identification apparatus shown in FIG. 6, may be referred to the method embodiment as shown in FIG. 3, which is not described herein again.

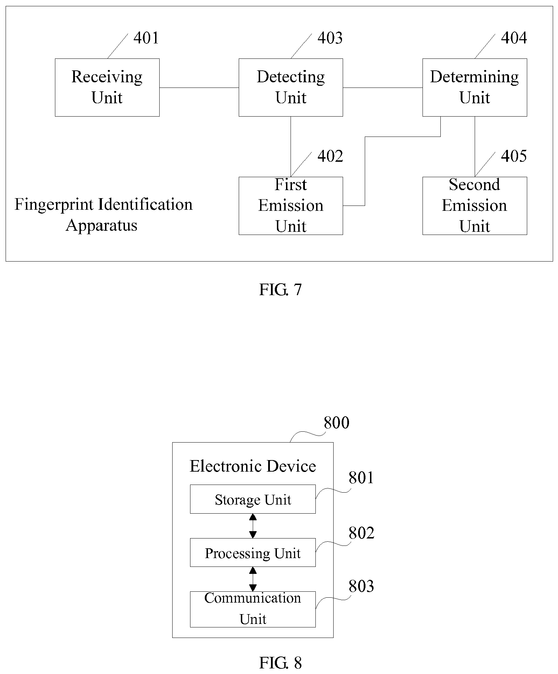

As shown in FIG. 7, FIG. 7 is a schematic structural diagram of another fingerprint identification apparatus disclosed in the embodiment of the present disclosure. What described in FIG. 7 is obtained by further optimizing based on FIG. 6. As shown in FIG. 7, the fingerprint identification apparatus further includes a second emission unit 405 in addition to the receiving unit 401, the first emission unit 402, the detecting unit 403, and the determining unit 404 as shown in FIG. 6.

The second emission unit 405 is further configured to emit a display fingerprint collection signal when the determining unit 404 determines that the result is no, wherein the difference between the frequency of the display fingerprint collection signal and the frequency of the normal fingerprint collection signal is greater than a preset threshold.

When the electronic device is in the charging state, the electronic device may emit the charging fingerprint collection signal of which the frequency is greater than a switching frequency of the charger to collect data of user's fingerprint image, so that the frequency of the charging fingerprint collection signal is offset from the charging frequency of the charger, which avoids interference from the voltage signals output by the charger on the charging fingerprint collection signal, and then can reduce the noise interference from the charger on the fingerprint image when the electronic device is charged. When the electronic device is not in the charging state, the electronic device may emit the display fingerprint collection signal of which frequency is greater than that of the normal fingerprint collection signal with a preset threshold, so that the frequency of the display fingerprint collection signal is offset from the frequency of the display signal of the electronic device, which avoids interference from the display signal of the electronic device on the charging fingerprint collection signal.

The implementation of the fingerprint identification apparatus shown in FIG. 7, may be referred to the method embodiment as shown in FIG. 3, which is not described herein again.

As shown in FIG. 8, FIG. 8 is a schematic structural diagram of an electronic device disclosed in an embodiment of the present disclosure. A possible structure of the electronic device involved in the above embodiment is shown in FIG. 8. The electronic device 700 includes a processing unit 802 and a communication unit 803. The processing unit 802 is configured to perform control management on the actions of the electronic device. For example, the processing unit 802 is configured to enable the electronic device to perform actions/operations in block S201 to S202 in FIG. 2, blocks S301 to S305 in FIG. 3, and/or other processes of solution described herein. The communication unit 803 is configured to support communication between the electronic device and other devices, such as communication with a base station in the mobile communication network. The electronic device may further include a storage unit 801 for storing program codes and data of the electronic device.

The processing unit 802 can be a processor or a controller, and can be, for example, a central processing unit (CPU), a general-purpose processor, a digital signal processor (DSP), and an application-specific integrated circuit (ASIC). Integrated Circuit (ASIC), Field Programmable Gate Array (FPGA) or other programmable logic device, transistor logic device, hardware component, or any combination thereof. It may implement or carry out various illustrative logical blocks, modules, and circuits described in connection with the present disclosure. The processor may also be a combination of computing functions, for example, a combination including one or more microprocessor, a combination of a DSP and a microprocessor, and the like. The communication unit 803 can be a communication interface, a transceiver, a transceiver circuit, etc., wherein the communication interface is a collective name and can include one or more interfaces. The storage unit 801 can be a memory.

When the processing unit 802 is a processor, the communication unit 803 is a communication interface, and the storage unit 801 is a memory, the electronic device according to the embodiment of the present disclosure may be the electronic device shown in FIG. 5.

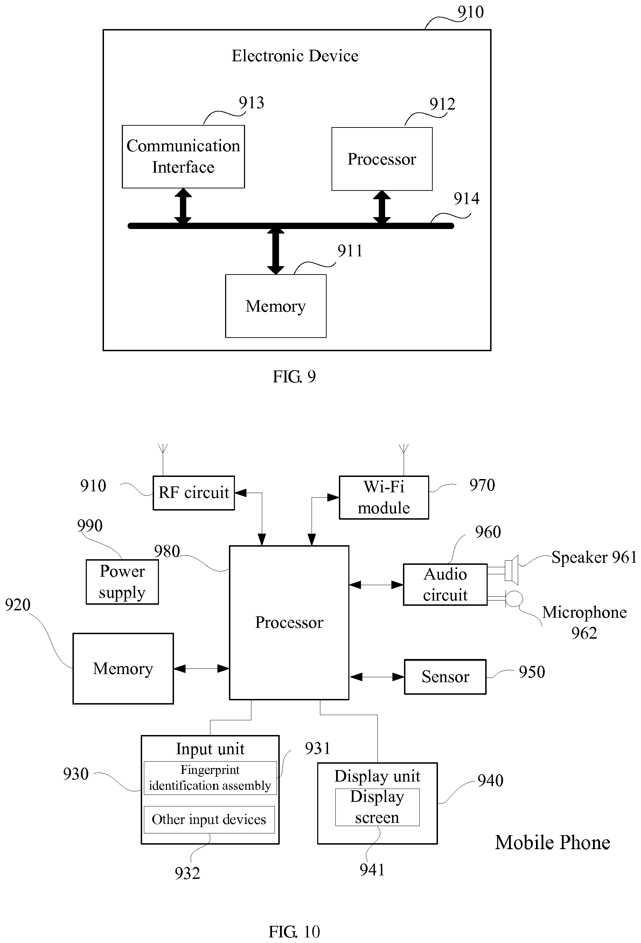

As shown in FIG. 9, FIG. 9 is a schematic structural diagram of another electronic device disclosed in an embodiment of the present disclosure. As shown in FIG. 9, the electronic device 910 includes a processor 912, a communication interface 913, and a memory 911. Alternatively, the electronic device 910 may further include a bus 915. The communication interface 913, the processor 912, and the memory 911 may be connected to each other through a bus 915. The bus 915 may be a Peripheral Component Interconnect (PCI) bus or an Extended Industry Standard Architecture (abbreviated EISA) bus and so on. The bus 915 can be divided into an address bus, a data bus, a control bus, and the like. For ease of representation, only one thick line is shown in FIG. 9, but it does not mean that there is only one bus or one type of bus.

The electronic device as shown in FIG. 8 or FIG. 9 can also be understood as an apparatus for an electronic device, which is not limited in an embodiment of the present disclosure.

Another electronic device is further provided in an embodiment of the present disclosure. As shown in FIG. 10, FIG. 10 is a schematic structural diagram of another electronic device disclosed in the embodiment of the present disclosure. For the convenience of description, only the parts related to the embodiments of the present disclosure are shown. If the specific technical details are not disclosed, please refer to the method part of the embodiment of the present disclosure. The electronic device may be any terminal device including a mobile phone, a tablet computer, a PDA (Personal Digital Assistant), a POS (Point of Sales), an in-vehicle computer, and the like. The electronic device is used as a mobile phone as an example:

FIG. 10 is a block diagram showing a partial structure of a mobile phone related to an electronic device provided by an embodiment of the present disclosure. As shown in FIG. 10, the mobile phone includes a radio frequency (RF) circuit 910, a memory 920, an input unit 930, a display unit 940, a sensor 950, an audio circuit 960, a wireless fidelity (Wi-Fi) module 970, a processor 980, and a power supply 990. It will be understood by those skilled in the art that the structure of the mobile phone as shown in FIG. 10 does not constitute a limitation to the mobile phone, and may include more or less components than those illustrated, or some components may be combined, or different component arrangements.

The components of the mobile phone will be described in detail with reference to FIG. 10 in the following.

The RF circuit 910 can be used for receiving and emitting information. Usually, the RF circuit includes, but not limited to, an antenna, at least one amplifier, a transceiver, a coupler, a Low Noise Amplifier (LNA), a duplexer and so on. In addition, the RF circuit may further communicate with other devices via wireless communication and a network. The above wireless communication may use any communication standard or protocol, including but not limited to Global System of Mobile communication (GSM), General Packet Radio Service (GPRS), Code Division Multiple Access (Code Division), Multiple Access (CDMA), Wideband Code Division Multiple Access (WCDMA), Long Term Evolution (LTE), E-mail, Short Messaging Service (SMS), and the like.

The memory 920 may be configured to store software programs and modules, and the processor 980 executes various function applications and data processing of the mobile phone by running the software programs and the modules stored in the memory920. The memory 920 may mainly include a program storage region and a data storage region, wherein the program storage region may store an operation system, application programs for at least one function (for example, an audio playing function, an image playing function, etc.), and the data storage region may store data (for example, audio data, telephone directory, etc.) created according to use of the mobile phone. In addition, the memory 920 may include a high-speed RAM, and may further include a non-volatile memory such as at least one of a disk storage device, a flash device, or other non-volatile solid storage devices.

The input unit 930 may be configured to receive input digital or character information and generate key signal input associated with user setting and functional control of the mobile phone. Specifically, the input unit 930 can include a fingerprint identification assembly 931 and other input devices 932. The fingerprint identification assembly 931 can collect data of a user's fingerprint. In addition to the fingerprint identification assembly 931, the input unit 930 may also include other input devices 932. Specifically, the other input devices 932 may include, but not limited to, one or more of a physical keyboard, a functional key (such as a volume control key and a switch key), a track ball, a mouse, an operating rod, etc.

The display unit 940 can be used to display information input by the user or information provided to the user as well as various menus of the mobile phone. The display unit 940 may include a display screen 941, which is alternatively configured to be a Liquid Crystal Display (LCD), an Organic Light-Emitting Diode (OLED) and the like. Although the fingerprint identification assembly 931 and the display screen 941 are used as two separate components to implement inputting and input functions of the mobile phone in FIG. 10, the fingerprint identification assembly 931 and the display screen 941 may be integrated to achieve the input and playback functions of the phone in some embodiments.

The mobile phone may also include at least one type of sensor 950, such as a light sensor, motion sensor, and other sensors. Specifically, the light sensor may include an ambient light sensor and a proximity sensor, wherein the ambient light sensor may adjust the brightness of the display screen 941 according to the brightness of the ambient light, and the proximity sensor may turn off the display screen 941 and/or backlight when the mobile phone is moved to the ear. As a motion sensor, the accelerometer sensor can detect the magnitude of acceleration in all directions (usually three axes). When it is stationary, it can detect the magnitude and direction of gravity, which can be used to identify the gesture of the mobile phone (such as horizontal and vertical screen switching, related games, magnetometer attitude calibration), vibration recognition related functions (such as pedometer, tapping), etc. Other sensors such as gyroscopes, barometers, hygrometers, thermometers, infrared sensors can be configured on the mobile phone, which are no longer described herein.

An audio circuit 960, a speaker 961 and a microphone 962 may provide an audio interface between the user and the mobile phone. The audio circuit 960 can convert the received audio data to the electrical data and then emit to the speaker 961. The speaker 961 then converts to the sound signal. On the other hand, the microphone 962 converts the collected sound signal into an electrical signal. The audio circuit 960 receives the electrical signal and then convert it into audio data. The processor 980 processes the audio data and then transmits another mobile phone via the RF circuit 910, or transmits to the memory 920 for further processing.

Wi-Fi belongs to a short-range wireless transmission technology. The mobile phone may assist the user to receive and send e-mails, webpage browsing, access to streaming media and the like by means of the Wi-Fi module 970, which provides a wireless wideband internet access for the user. Although the Wi-Fi module 970 is illustrated in FIG. 10, it may be understood that, it may be optional components of the mobile phone and may totally be omitted without changing the essence of the present disclosure as claimed.

The processor 980 is a control center of the mobile phone, which is connected to all parts of the mobile phone by utilizing various interfaces and lines and execute various functions and processing data of the mobile phone by running or executing the software program and/or the module stored in the memory and calling data stored in the memory 920. Thus, it wholly monitors the mobile phone. Optionally, the processor 980 may include one or more processing units. The processor 980 may be integrated with an application processor and a modulation-demodulation processor. The application processor mainly processes an operation system, a user interface, an application program and the like, and the modulation-demodulation processor mainly processes wireless communication. It will be appreciated that the above described modulation-demodulation processor may also not be integrated into the processor 980.

The mobile phone also includes a power supply 990 (such as a battery) that supplies power to the various components. Preferably, the power supply can be logically coupled to the processor 980 through a power management system to manage functions such as charging, discharging, and power management through the power management system.

Although not shown, the mobile phone may further include a camera, a Bluetooth module, and the like, which are not described in detail herein again.

In the foregoing embodiments shown in FIG. 2 to FIG. 3, each actions/operation of the method can be implemented based on the structure of the mobile phone.

In the foregoing embodiments shown in FIGS. 4 to 7, each unit function can be implemented based on the structure of the mobile phone.

A computer storage medium is further provided in embodiments of the present disclosure. The computer storage medium stores computer programs for electronic data exchange. The computer programs cause a computer to perform some or all of the actions of any of the methods described in the foregoing embodiments. The above computer includes a mobile terminal.

A computer program product is provided in embodiments of the present disclosure. The computer program product includes a non-transitory computer readable storage medium storing a computer program. The computer programs cause a computer to perform some or all of the actions of any of the methods described in the foregoing embodiments. The computer program product can be a software installation package, and the above computer includes a mobile terminal.

It should be noted that, for the foregoing method embodiments, for the sake of brevity, they are all described as a series of action combinations, but those skilled in the art should understand that the present disclosure is not limited by the described action sequence. Because certain steps may be performed in other sequences or concurrently in accordance with the present disclosure. In the following, those skilled in the art should also understand that the embodiments described in the specification are all preferred embodiments, and the actions and modules involved are not necessarily required by the present disclosure.

In the above embodiments, the descriptions of the various embodiments are all focused on, and the parts that are not detailed in a certain embodiment can be referred to the related descriptions of other embodiments.

In several embodiments provided herein, it should be understood that the disclosed apparatus may be implemented in other ways. For example, the device embodiments described above are merely illustrative. For example, the division of the above units is only a logical function division. In actual implementation, there may be another division manner. For example, multiple units or components may be combined or integrated to another system, or some features can be ignored or not executed. In addition, the mutual coupling or direct coupling or communication connection shown or discussed may be an indirect coupling or communication connection through some interface, device or unit, and may be electrical or otherwise.

The units described above as separate components may or may not be physically separated, and the components illustrated as units may or may not be physical units, which may be located in one place, or may be distributed to multiple network units. Some or all of the units may be selected according to actual needs to achieve the purpose of the solution of the embodiment.

In addition, each functional unit in each embodiment of the present disclosure may be integrated into one processing unit, or each unit may exist physically separately. Alternatively, two or more units may also be integrated into one unit. The above integrated unit can be implemented in the form of hardware or in the form of a software functional unit.

The above-described integrated unit can be stored in a computer readable memory if it is implemented in the form of a software functional unit and sold or used as a standalone product. Based on such understanding, the technical solution of the present disclosure, in essence or the contribution to the prior art, or all or part of the technical solution may be embodied in the form of a software product. The software product is stored in a memory, which includes a number of instructions causing a computer device (which may be a personal computer, server or network device, etc.) to perform all or part of the actions of the above-described methods of various embodiments of the present disclosure. The foregoing memory includes a U disk, a Read-Only Memory (ROM), a Random Access Memory (RAM), a removable hard disk, a magnetic disk, or an optical disk, and the like, which can store program codes.

One of ordinary skill in the art can understand that all or part of the various methods of the above embodiments can be completed by related hardware instructed by a program. The program can be stored in a computer readable memory, and the memory can include a flash drive, read-only memory (ROM), random access memory (RAM), disk or CD.

The embodiments of the present disclosure have been described in detail above, and the principles and implementations of the present disclosure are described in the specific examples. The description of the above embodiments is only used to help understand the method of the present disclosure and its core ideas. For a person skilled in the art, there will have a change in the specific embodiments and the scope of present disclosure according to the idea of the present disclosure. In summary, the content of the present specification should not be construed as limiting the present disclosure.

## Claims

1. A fingerprint identification assembly applied in an electronic device, comprising:
a fingerprint chip, configured to emit a charging fingerprint collection signal;
a cover disposed at one side of the fingerprint chip; and
a base disposed at other side of the fingerprint chip away from the cover, configured to support the fingerprint chip and the cover;
wherein the charging fingerprint collection signal is configured to collect data of a user's fingerprint image, a frequency of the charging fingerprint collection signal is greater than a preset frequency, and the preset frequency is a switching frequency of the charger of the electronic device.

2. The fingerprint identification assembly of claim 1, further comprising:
a metal ring disposed around the cover.

3. The fingerprint identification assembly of claim 2, wherein the metal ring has a shape of one or more of circle, ellipse, rectangle, and polygon.

4. The fingerprint identification assembly of claim 2 or 3, wherein the metal ring is made from one of stainless steel, gold, silver, and copper.

5. The fingerprint identification assembly of any one of claims 2-4, wherein the metal ring is disposed around and electronically connected to the cover.

6. A fingerprint identification method, applied to a fingerprint identification assembly of any one of claims 1-5, comprising:
receiving a fingerprint collection instruction; and
emitting a charging fingerprint collection signal, wherein the charging fingerprint collection signal is configured to collect data of a user's fingerprint image, a frequency of the charging fingerprint collection signal is greater than a preset frequency, and the preset frequency is a switching frequency of a charger of the electronic device.

7. The method of claim 6, before the emitting the charging fingerprint collection signal, further comprising:
detecting whether the electronic device is in a charging state; and
perform the emitting the charging fingerprint collection signal when the electronic device is in the charging state.

8. The method of claim 7, after the detecting whether the electronic device is in the charging state, further comprising:
determining whether a difference between a frequency of a display signal of the electronic device and a frequency of a normal fingerprint collection signal is greater than a preset threshold when the electronic device is not in the charging state; and
perform the emitting the charging fingerprint collection signal when the difference is greater than the preset threshold.

9. The method of claim 8, after the determining whether the difference between the frequency of the display signal of the electronic device and the frequency of the normal fingerprint collection signal is greater than the preset threshold, further comprising:
emitting a display fingerprint collection signal when the difference between the frequency of the display signal of the electronic device and the frequency of the normal fingerprint collection signal is less than or equal to the preset threshold, wherein the difference between a frequency of the display fingerprint collection signal and the normal fingerprint collection signal is greater than the preset threshold.

10. The method of any one of claims 6-9, wherein an amplitude of the charging fingerprint collection signal is greater than a preset amplitude, and the preset amplitude is a magnitude of a voltage signal output by the charger.

11. The method of any one of claims 6 to 10, wherein the receiving the fingerprint collection instruction is implemented by user voice inputting or sensing a fingerprint contact on the fingerprint identification assembly.

12. A fingerprint identification apparatus, comprising:
a receiving unit, configured to receive a fingerprint collection instruction;
a first emission unit, configured to emit a charging fingerprint collection signal, wherein the charging fingerprint collection signal is configured to collect data of fingerprint image, a frequency of the charging fingerprint collection signal is greater than a preset frequency, and the preset frequency is a switching frequency of a charger of the electronic device.

13. The fingerprint identification apparatus of claim 12, further comprising:
a detecting unit, configured to detect whether the electronic device is in a charging state;
wherein the first emission unit is further configured to emit a charging fingerprint collection signal when the detecting unit detects that the electronic device is in the charging state.

14. The fingerprint identification apparatus of claim 13, further comprising:
a determining unit, configured to determine whether a difference between a frequency of a display signal of the electronic device and a frequency of a normal fingerprint collection signal is greater than a preset threshold when the detecting unit detects that the electronic device is not in the charging state;
wherein the first emission unit is further configured to emit the charging fingerprint collection signal when the determining unit determines that a result is yes.

15. The fingerprint identification apparatus of claim 14, further comprising:
a second emission unit, configured to emit a display fingerprint collection signal when the determining unit determines that the result is negative, wherein a difference between a frequency of the display fingerprint collection signal and a frequency of the normal fingerprint collection signal is greater than the preset threshold.

16. The fingerprint identification apparatus of any one of claims 12-15, wherein an amplitude of the charging fingerprint collection signal is greater than a preset amplitude, and the preset amplitude is an amplitude of a voltage signal output by the charger.

17. The fingerprint identification apparatus of any one of claims 12-16, wherein the receiving unit receives the fingerprint collection instruction by the user voice inputting or sensing fingerprint contacts on the fingerprint identification assembly.

18. An electronic device, comprising:
a processor;
a memory coupled to the processor, for storing executable program codes; and
a communication interface coupled to the processor, for wireless communication;
wherein the processor is configured to invoke the executable program code in the memory to perform a method in any one of claims 6-11.

19. A computer storage medium, storing a computer program, wherein the computer program causes a computer to perform a method of any one of claims 6-11.

20. A computer program product, comprising a non-transitory computer readable storage medium storing a computer program, wherein the computer program being configured to cause a computer to perform a method in any of claims 6-11.
